# EUROPÄISCHE PATENTSCHRIFT

(11) **EP 2 812 204 B1**
(45) Veröffentlichungstag und Bekanntmachung des Hinweises auf die Patenterteilung: **13.09.2017**
(21) Anmeldenummer: 13704710.6
(22) Anmeldetag: 05.02.2013
(51) Int. Cl.: B60K 37/06, B60K 35/00, B60W 30/12, B60W 30/14, B60W 50/08, B60W 50/16, B62D 15/02

(54) **KRAFTWAGEN MIT EINER FAHRERASSISTENZEINRICHTUNG UND VERFAHREN ZUM BETREIBEN EINES KRAFTWAGENS**
AUTOMOBILE VEHICLE HAVING A DRIVER ASSIST SYSTEM AND METHOD FOR OPERATING AN AUTOMOBILE VEHICLE
VÉHICULE AUTOMOBILE COMPRENNANT UN SYSTÈME D'ASSISTANCE DU CONDUCTEUR ET PROCÉDÉ POUR OPÉRER UN VÉHICULE AUTOMOBILE

(30) Priorität: 06.02.2012 DE 102012002306
(43) Veröffentlichungstag der Anmeldung: 17.12.2014
(73) Patentinhaber: Audi AG, 85045 Ingolstadt (DE)
(72) Erfinder: WIMMER, Martin, 93049 Regensburg (DE); MEURLE, Jürgen, 85055 Ingolstadt (DE); SACHER, Heike, 80797 München (DE); SIEDERSBERGER, Karl-Heinz, 86669 Königsmoos (DE)
(74) Vertreter: Brandt, Kai
(86) Internationale Anmeldenummer: PCT/EP2013/000345
(87) Internationale Veröffentlichungsnummer: WO 2013/117321

(56) Entgegenhaltungen:
- WO-A1-99/52761
- WO-A1-2007/021263
- WO-A1-2007/038884
- DE-A1-102006 060 554
- DE-A1-102007 000 939
- DE-A1-102010 022 620
- US-A1- 2009 287 367
- US-A1- 2013 002 416

## Beschreibung

Die Erfindung betrifft einen Kraftwagen mit einer Fahrerassistenzeinrichtung, welche dazu ausgelegt ist, den Kraftwagen selbständig während einer Fahrt des Kraftwagens zu führen und welche hierbei zwischen zumindest zwei Assistenzmodi umschaltbar ist, die sich in einem Grad der Selbständigkeit der Fahrerassistenzeinrichtung beim Führen des Kraftwagens voneinander unterscheiden. Unter einem Führen des Kraftwagens ist hierbei zum einen das Lenken des Kraftwagens (Folgen eines Straßenverlaufs, Ausrichten des Kraftwagens innerhalb einer Spur, Spurwechselmanöver), was auch als Querführung bezeichnet wird, und zum anderen das Steuern der Fahrgeschwindigkeit des Kraftwagens (Beschleunigen, Bremsen, Notbremsen, Beibehalten der Geschwindigkeit), was auch als Längsführung bezeichnet wird. Zu der Erfindung gehört auch ein Verfahren zum Betreiben eines Kraftwagens, durch welches einem Fahrer ein Zustand des Kraftwagens angezeigt wird.

Ein Fahrerassistenzsystem der genannten Art ist aus der DE 10 2010 022 433 A1 bekannt. Danach kann ein Fahrerassistenzsystem in einem vollautomatischen Assistenzmodus die Führung des Fahrzeugs vollständig selbstständig ausführen. Der Fahrer des Kraftwagens muss dann während der Fahrt weder das Lenkrad noch die Pedalen des Kraftwagens bedienen und kann daher für eine verhältnismäßig lange Zeitdauer seine Aufmerksamkeit anderen Dingen widmen, wie beispielsweise der Bedienung eines Infotainmentsystems.

Das Dokument DE 10 2010 022620 A1 offenbart ein Kraftfahrzeug mit einem Manöverassistenzsystem zur automatischen Ausführung von Fahrmanövern des Kraftfahrzeuges, wobei das Kraftfahrzeug eine kreuzartig ausgestaltete Bedienanordnung zur Bedienung des Manöverassistenzsystems aufweist. Unter einem selbständigen Führen des Kraftwagens ist im Zusammenhang mit der Erfindung aber auch ein teilautomatischer Assistenzmodus zu verstehen, bei welchem der Grad der Selbständigkeit des Fahrerassistenzsystems bei der Führung des Kraftwagens verringert ist und welcher dann beispielsweise lediglich in der Funktionalität bestehen kann, die Fahrgeschwindigkeit des Kraftwagens auf eine Soll- oder Setzgeschwindigkeit einzuregeln, welche der Fahrer durch Einstellen eines Werts des entsprechenden Fahrparameters des Fahrerassistenzsystems vorgibt (Fahrgeschwindigkeitsregelung).

Ein weiterer wünschenswerter Assistenzmodus ist die autonome Führung des Kraftwagens durch eine Fahrerassistenzeinrichtung. Im Unterschied zum vollautomatischen Assistenzmodus wird im autonomen Assistenzmodus durch die Fahrerassistenzeinrichtung auch darüber entschieden, welche Werte bei den Fahrparametern (Sollabstände, Sollgeschwindigkeit) für ein momentan ausgeführtes Fahrmanöver und/oder welche Fahrmanöver (Spurwechsel, Abbiegen, Einparken und dergleichen) auszuführen sind. Im vollautomatischen Assistenzmodus ist dagegen vorgesehen, dass der Fahrer über eine Benutzerschnittstelle vorgibt, welche Fahrmanöver auszuführen sind bzw. welche Abstände und Geschwindigkeiten bei einem momentan ausgeführtes Fahrmanöver durch die Fahrerassistenzeinrichtung beim Befahren einer Fahrspur eingeregelt werden sollen. Ein anderer Unterschied zwischen den beiden Assistenzmodi kann darin bestehen, wie die Fahrerassistenzeinrichtung bei einer unvorhergesehenen Entwicklung des Verkehrsgeschehens reagiert, wenn also eine sichere Führung durch die Fahrerassistenzeinrichtung nicht mehr gewährleistet ist. Im vollautomatischen Assistenzmodus ist dann vorgesehen, dass sich die Fahrerassistenzeinrichtung deaktiviert und die Kontrolle über den Kraftwagen an den Fahrer abgibt, während dagegen im autonomen Assistenzmodus der Kraftwagen durch die Fahrerassistenzeinrichtung selbst in einen sicheren Zustand gebracht wird, indem der Kraftwagen z.B. angehalten wird.

Ein Fahrer des Kraftwagens hat je nach momentan aktivem Assistenzmodus während der Fahrt den Eindruck, dass ohne seine Kontrolle bestimmte Führungsaufgaben von dem Kraftwagen selbständig durchgeführt werden. Hierbei muss für jeden Assistenzmodus, in welchem die Fahrerassistenzeinrichtung betreibbar ist, sichergestellt sein, dass dem Fahrer stets klar ist, bis zu welchem Grad das Fahrerassistenzsystem den Kraftwagen überwacht und führt, welche Eingriffsmöglichkeiten dem Fahrer selbst beim Führen des Kraftwagens noch gegeben sind und welche Führungsaufgaben der Fahrer zwingend selbst ausführen muss. Verliert der Fahrer hierbei die Übersicht, kann es zu einer Gefährdung seiner Sicherheit kommen. Wähnt der Fahrer beispielsweise die Fahrerassistenzeinrichtung im vollautomatischen Assistenzmodus und lässt er deshalb das Lenkrad los, um sich mit dem Infotainmentsystem zu beschäftigen, kann hierbei das Fahrzeug von der Fahrbahn abkommen, weil die Fahrerassistenzeinrichtung z.B. überhaupt nicht aktiviert ist, das heißt eine vollständig manuelle Fahrweise von dem Fahrer verlangt ist (hier deshalb als manueller Assistenzmodus bezeichnet).

Das Spektrum der von der manuellen Fahrt über die Teil- und Vollautomation bis hin zur Autonomie reichenden Selbständigkeit der Fahrerassistenzeinrichtung (Automationsspektrum) soll in seiner Komplexität künftig für den Nutzer transparent und verständlich bedienbar sein. Eine handhabbare Komplexität dieser vier genannten Assistenzmodi, eine klare Abgrenzbarkeit der einzelnen Assistenzmodi sowie charakteristische Bedienmodalitäten innerhalb der einzelnen Assistenzmodi sind wichtige Eigenschaften zukünftiger Bedienkonzepte. Während für die Teilautomation (z.B. Fahrgeschwindigkeitsregelung, Active-Lane-Control, d.h. Spurhalteassistenz) etablierte Bedienelemente wie Tasten, Lenkrad oder Hebel zur Verfügung stehen, gibt es für die prototypische Bedienung der Vollautomation und der Autonomie bisher lediglich konzeptionelle Ansätze. Diese Ansätze sind häufig lediglich Ergänzungen beziehungsweise Erweiterungen bestehender Bedienkonzepte und stellen isolierte Insellösungen dar. Solche Insellösungen erschöpfen sich in der Regel in bloßer Funktionsintegration in bestehende Bedienelemente, was zu einer Vergrößerung der Funktionsdichte der einzelnen Bedienelemente führt und so aufgrund der Vielfalt und Komplexität der hieraus resultierenden Bedieneinrichtungen nicht zielführend ist. Die Handhabbarkeit und Funktionsvielfalt aktueller Bedienelemente ist bereits ausgereizt.

Eine Aufgabe der vorliegenden Erfindung ist es, bei einem Kraftwagen mit einem Fahrerassistenzsystem, das den Kraftwagen ganz oder teilweise selbständig führen kann, die Übersichtlichkeit bei dessen Bedienung zu gewährleisten.

Die Aufgabe wird durch einen Kraftwagen gemäß Patentanspruch 1 und ein Verfahren gemäß Patentanspruch 11 gelöst. Vorteilhafte Weiterbildungen des erfindungsgemäßen Kraftwagens sind durch die Unteransprüche gegeben.

Bei dem erfindungsgemäßen Kraftwagen ist eine Fahrerassistenzeinrichtung dazu ausgelegt, in einem vollautomatischen Assistenzmodus zumindest eine selbstständige Querführung des Kraftwagens, in einem teilautomatischen Assistenzmodus zumindest eine Geschwindigkeitsregelung und in einem manuellen Assistenzmodus gar keine Führung des Kraftwagens durchzuführen. Der erfindungsgemäße Kraftwagen weist zudem drei Bedieneinrichtungen auf, die sich voneinander darin unterscheiden, dass die zu ihrer Bedienung auszuführenden Bedienhandlungen unterschiedlich sind. Jedem der Assistenzmodi ist nun eine eigene Bedieneinrichtung zugeordnet. Hierbei ist die erste Bedieneinrichtung zum direkten Führen des Kraftwagens durch einen Fahrer des Kraftwagens ausgebildet. Bei der ersten Bedieneinrichtung kann es sich beispielsweise um ein Lenkrad und Pedalen handeln. Die zweite Bedieneinrichtung ist zum Einstellen von Fahrparametern (Sollabstände, Sollgeschwindigkeit) für den teilautomatischen Assistenzmodus ausgebildet und kann beispielsweise ein Bedienelement aufweisen, das an einem Lenkrad des Kraftwagens angeordnet ist und hierbei dann bevorzugt einen Tastschalter, einen Wippschalter oder ein Drehrad umfasst. Die dritte Bedieneinrichtung ist schließlich zum Bedienen einer Benutzerschnittstelle für den vollautomatischen Assistenzmodus ausgelegt. Bei der Benutzerschnittstelle kann es sich um diejenige handeln, die von der Anmelderin zusammen mit der vorliegenden Anmeldung am selben Tag zum Patent angemeldet wurde. Die dritte Bedieneinrichtung kann ebenfalls auf der ersten Bedieneinrichtung, also etwa dem Lenkrad, angeordnet sein. Bei der dritten Bedieneinrichtung kann es sich beispielsweise um ein Touch-Screen (berührungsempfindlicher Bildschirm) handeln, der auf einem Pralltopf des Lenkrads angeordnet ist. Über die besagte Benutzerschnittstelle kann in einem vollautomatischen Assistenzmodus von einem Benutzer ein durch die Fahrerassistenzeinrichtung selbstständig auszuführendes Fahrmanöver auswählbar und/oder ein Fahrparameter eines aktuell ausgeführten Fahrmanövers einstellbar sein. Dabei ist vorgesehen, zumindest zwei Bedieneinrichtungen gegeneinander beweglich zu lagern und die Fahrerassistenzeinrichtung dazu auszulegen, eine relative Lage der zumindest zwei Bedieneinrichtungen zueinander in Abhängigkeit von dem momentan aktiven Assistenzmodus durch Ansteuern eines Aktors einzustellen. Als dritte Bedieneinrichtung ist dabei ein Touch-Screen auf dem Pralltopf des Lenkrads angeordnet, so dass beim Aktivieren des vollautomatischen Assistenzmodus das Lenkrad (im Verhältnis zum Touch-Screen) von dem Fahrer des Kraftwagens weg bewegt werden kann. Damit tritt der Touch-Screen für den Fahrer in den Vordergrund, wodurch ihm veranschaulicht wird, dass er nun nicht mehr das Lenkrad zu nutzen, sondern die Benutzerschnittstelle für den vollautomatischen Assistenzmodus zu bedienen hat.

Die Erfindung beruht auf der Erkenntnis, dass der Fahrer des Kraftwagens bzw. Bediener der Fahrerassistenzeinrichtung für jeden Assistenzmodus des Automationsspektrums (manuelle Fahrt, Teilautomation, Vollautomation) ein eigenständiges, durch die jeweilige Bedieneinrichtung verkörpertes Interaktionsmedium mit eigenständiger Interaktionsform zur Verfügung gestellt bekommen sollte. Bei diesem aufgeteilten Konzept ist eine örtliche Nähe der verschiedenen Bedieneinrichtungen vorteilhaft, aber nicht zwingend. Durch Bereitstellen dreier unterschiedlicher Bedieneinrichtungen ist es nicht nötig, einzelne Bedienelemente je nachdem, welcher Assistenzmodus gerade aktiv ist, mit unterschiedlichen Funktionen zu belegen. Somit ist wirkungsvoll vermieden, dass ein Bediener der Fahrerassistenzeinrichtung diese fehlerhaft bedient. Indem die Bedienhandlungen für jede Bedieneinrichtung unterschiedlich sind, ergibt sich auch zugleich ein unterschiedliches Bedienmuster der Fahrerassistenzeinrichtung in jedem der Assistenzmodi bzw. für die manuelle Fahrt durch den Fahrer. Dem Benutzer fällt es somit sehr viel leichter, sich die nötigen Bedienschritte zu merken.

Zweckmäßigerweise ist in zumindest einem Assistenzmodus des Weiteren vorgesehen, dass zumindest eine der Bedieneinrichtungen deaktiviert ist. So kann beispielsweise vorgesehen sein, im vollautomatischen Assistenzmodus die Bedieneinrichtung für den teilautomatischen Assistenzmodus zu blockieren, sodass ein Fahrer bei dem Versuch, über diese die Fahrerassistenzeinrichtung zu bedienen, sofort daran erinnert wird, dass dies in dem momentan aktiven Assistenzmodus nicht möglich ist.

Eine vorteilhafte Ausgestaltung des Kraftwagens sieht vor, zumindest eine der Bedieneinrichtungen in dem Kraftwagen bewegbar zu lagern und zum Verstellen einer Position der bewegbar gelagerten Bedieneinrichtung einen Aktor in dem Kraftwagen bereitzustellen. In diesem Fall ist die Fahrerassistenzeinrichtung dann dazu ausgelegt, die Position der zumindest einen Bedieneinrichtung in Abhängigkeit von dem momentan aktiven Assistenzmodus durch Ansteuern des zumindest einen Aktors einzustellen. Hierdurch ergibt sich der Vorteil, dass dem Fahrer durch die Position der Bedieneinrichtungen veranschaulicht wird, welcher Assistenzmodus gerade aktiv ist und welche Bedienhandlungen er somit momentan ausführen kann.

Zweckmäßigerweise weist der Kraftwagen für den Fall, dass die Bedieneinrichtung ein Lenkrad umfasst, einen Aktor auf, der dazu ausgelegt ist, an dem Lenkrad eine Kraftrückkopplung für einen Benutzer des Lenkrads zu erzeugen, so dass das Lenkrad durch den Aktor drehbar ist. In diesem Fall ist die Fahrerassistenzeinrichtung bei dem erfindungsgemäßen Kraftwagen dann dazu ausgelegt, im vollautomatischen Assistenzmodus ein Steuersignal zum Steuern der Kraftrückkopplung an den Aktor zu erzeugen. Hierdurch kann gemäß dem erfindungsgemäßen Verfahren die Drehlage des Lenkrades in Abhängigkeit von einem momentan von der Fahrerassistenzeinrichtung eingestellten Radeinschlagwinkels eingestellt werden. An dem Lenkeinschlag des Lenkrads kann der Fahrer dann ersehen, wie die Fahrerassistenzeinrichtung momentan den Kraftwagen lenkt. Zudem ist es für den Fall, dass der vollautomatische Assistenzmodus in einem Notfall abgeschaltet werden muss und der Fahrer spontan die Führung des Kraftwagens wieder übernehmen muss, vorteilhaft, wenn das Lenkrad bereits den richtigen Lenkeinschlag aufweist.

Bei einer besonders bevorzugten Ausführungsform des erfindungsgemäßen Kraftwagens ist bei der Fahrerassistenzeinrichtung zusätzlich ein autonomer Assistenzmodus vorgesehen, in welchem die Fahrerassistenzeinrichtung den Kraftwagen vollständig selber führt und hierbei auch durchzuführende Fahrmanöver selbständig auswählt. Ein solcher Assistenzmodus ist beispielsweise dann zweckmäßig, wenn der Kraftwagen im Stau steht. Der Fahrer kann sich dann in dieser Zeit vollständig einer anderen Tätigkeit, beispielsweise der Bedienung des Infotainmentsystems oder dem Lesen einer Zeitung, widmen. Bevorzugt werden hierbei dem Fahrer über die dritte Bedieneinrichtung Bedienmöglichkeiten für ein Infotainmentsystem des Kraftwagens geboten, indem Funktionen des Infotainmentsystems einzelnen Bedienelementen der dritten Bedieneinrichtung zugeordnet sind, so dass sie durch Betätigen dieser Bedienelemente aktivierbar sind.

Zu der Erfindung gehören auch Weiterbildungen des erfindungsgemäßen Verfahrens, die Merkmale aufweisen, die bereits im Zusammenhang mit den Weiterbildungen des erfindungsgemäßen Kraftwagens erläutert wurden. Daher sind diese Weiterbildungen des erfindungsgemäßen Verfahrens hier nicht noch einmal beschrieben.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird im Folgenden anhand eines Ausführungsbeispiels näher erläutert. Dazu zeigt:
- Fig. 1: eine schematische Darstellung eines Lenkrads einer Ausführungsform des erfindungsgemäßen Kraftwagens in perspektivischer Ansicht, wobei eine relative Lage von Komponenten des Lenkrads durch eine Fahrerassistenzeinrichtung eingestellt ist, die in einem manuellen oder einem teilautomatischen Assistenzmodus betrieben wird;
- Fig. 2: das Lenkrad von Fig. 1, wobei die relative Lage der Komponenten für einen vollautomatischen Assistenzmodus der Fahrerassistenzeinrichtung eingestellt ist; und
- Fig. 3: das Lenkrad von Fig. 1, wobei dessen Komponenten für einen autonomen Assistenzmodus der Fahrerassistenzeinrichtung eingestellt sind.

Das Beispiel stellt eine bevorzugte Ausführungsform der Erfindung dar.

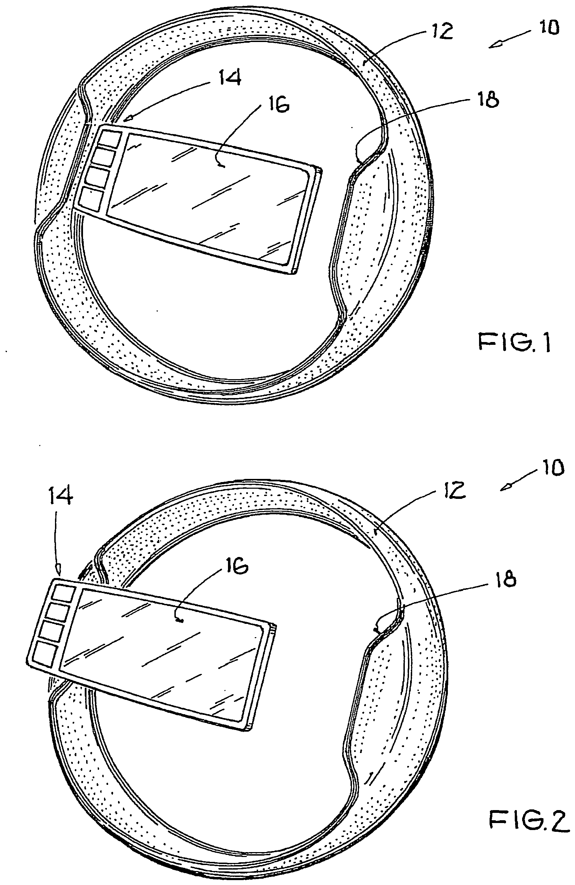

In Fig. 1 bis Fig. 3 ist ein Lenkrad 10 mit einem Lenkradkranz 12, einem Tastenfeld 14 und einem Touch-Screen 16 (berührungsempfindlicher Bildschirm) dargestellt. Der Touch-Screen 16 ist auf einem (nicht dargestellten) Pralltopf des Lenkrads 10 befestigt. An dem Lenkradkranz 12 ist eine Handballenablage 18 ausgebildet. In Fig. 1 bis Fig. 3 sind der Übersichtlichkeit halber tragende Elemente, die nicht für die Erläuterung der Erfindung nötig sind, nicht dargestellt.

Das Lenkrad 10 ist in einem nicht weiter dargestellten Kraftwagen, beispielsweise einem Personenkraftwagen, eingebaut. Der Kraftwagen weist eine Fahrerassistenzeinrichtung auf, die in einem manuellen Assistenzmodus, einem teilautomatischen, einem vollautomatischen und einem autonomen Assistenzmodus betrieben werden kann. Der manuelle Assistenzmodus entspricht einem deaktivierten Zustand der Fahrerassistenzeinrichtung, in welchem die Fahrerassistenzeinrichtung lediglich auf ein Aktivierungssignal reagiert. Im teilautomatischen Assistenzmodus wird durch die Fahrerassistenzeinrichtung eine Längsführung des Kraftwagens in Form einer Fahrgeschwindigkeitsregelung und einer Spurhalteassistenz (hier zusammen als ACC - active cruise control bezeichnet) durchgeführt. Eine Querführung des Kraftwagens ist dagegen weiterhin vom Fahrer des Kraftwagens durchzuführen. Im vollautomatischen Assistenzmodus wird der Kraftwagen vollständig durch die Fahrerassistenzeinrichtung geführt, wobei durch einen Fahrer des Kraftwagens die auszuführenden Fahrmanöver (Überholen eines voran fahrenden Fahrzeugs, Abbiegen, Einparken, Spurwechsel und dergleichen) ausgewählt oder auch zu einem aktuell ausgeführten Fahrmanöver Fahrparameterwerte eingestellt werden können, durch welche das Führverhalten der Fahrerassistenzeinrichtung festgelegt wird (Sollabstände, Sollgeschwindigkeiten und dergleichen). In einem autonomen Assistenzmodus wird durch die Fahrerassistenzeinrichtung zusätzlich auch selbstständig festgelegt, welche Fahrmanöver auszuführen sind. Der autonome Assistenzmodus ist beispielsweise inaktivierbar, falls durch die Fahrerassistenzeinrichtung erkannt wird, dass der Kraftwagen im Stau steht und höchstens mit Schrittgeschwindigkeit geführt werden kann.

Im manuellen Assistenzmodus kann der Fahrer für eine manuelle Fahrt das Lenkrad 10 wie gewohnt als normales Lenkrad nutzen. Der Pralltopf des Lenkrads 10 ist dabei durch den Touch-Screen 16 in seinem Erscheinungsbild frei konfigurierbar. Es ist möglich, während der manuellen Fahrt beispielsweise Infotainmentinhalte anzuzeigen und eine Bedienung des Infotainmentsystems des Kraftwagens zu ermöglichen. Eine andere Möglichkeit ist das Anzeigen eines Logos des Herstellers des Kraftwagens, das sich mit dem aktuellen Lenkwinkel des Lenkrads 10 mit bewegt oder aber auch bezüglich einer Horizontalen feststehend ausgeführt sein kann.

Im teilautomatischen Assistenzmodus wird das Fahrerassistenzsystem in dem gezeigten Ausführungsbeispiel über Tastenelemente des Tastenfelds 14 bedient. Die Geschwindigkeit kann beispielsweise über eine zentral angeordnete, monostabile Wippe ermöglicht sein. Über verschiedene weitere Tasten, die um diese Wippe angeordnet sein können, können die übrigen ACC-Funktionalitäten aktiviert bzw. deaktiviert werden. Es kann auch vorgesehen sein, dass eine Abstandseinstellung des ACC-Systems über das berührungsempfindliche Feld des Touch-Screens 16 ausgeführt ist. Da die Abstandsregelung verhältnismäßig selten genutzt wird, ergibt sich hierbei der Vorteil, dass sie nur bei Bedarf eingeblendet wird und kein gesondertes Bedienelement bereitgestellt werden muss. In der Teilautomation ist der Touch-Screen 16 fest bezüglich des Lenkkranzes 12 fixiert, sodass er sich beim Lenken mit bewegt.

Weitere Elemente für die Bedienung des Fahrerassistenzsystems im teilautomatischen Assistenzmodus können beispielsweise ein Lenkstockhebel und gegebenenfalls ein Paddle (monostabiler Kippschalter mit flachem, mit zwei Fingern greifbarem, flügelförmigem Bedienhebel) sein, die an einer vom Fahrer abgewandten Seite einer Speiche des Lenkrads 10 oder des Lenkkranzes 12 angeordnet sein können.

Die Aktivierung des vollautomatischen Assistenzmodus kann beispielsweise über eine entsprechende Fläche im Touch-Screen 16 erfolgen. Beim Übergang in den vollautomatischen Assistenzmodus wird der Lenkradkranz 12 durch einen Aktor des Kraftwagens, entkoppelt vom Touch-Screen 16, um bevorzugt nur wenige Zentimeter in Fahrzeuglängsrichtung vom Fahrer verfahren. Bei dem Aktor kann es sich um einen elektromechanischen Aktor, z.B. einen Elektromotor, handeln. Der Lenkradkranz 12 ist auch in der für den vollautomatischen Assistenzmodus angefahrenen Stellung noch vom Fahrer erreichbar, auch wenn dieser sich in den Fahrersitz zurücklehnt. Hierdurch kann der Fahrer im Falle einer dringenden Fahrerübernahmeanforderung, d.h. bei Abbruch des vollautomatischen Assistenzmodus, die Führung des Kraftwagens selbst übernehmen. Wesentliches Merkmal der Bedienung der Fahrerassistenzeinrichtung im vollautomatischen Assistenzmodus ist somit, dass die Bedienelemente zur Längs- und Querführung des Fahrzeugs für den Fahrer weiterhin im primären Greifraum positioniert sind, so dass er also in einer normalen Sitzposition im Fahrersitz weiterhin den Lenkradkranz 12 ergreifen kann und so schnell wieder selbst die Führung übernehmen kann.

Der Lenkradkranz 12 ist des Weiteren über einen weiteren Aktor aktiv von der Fahrerassistenzeinrichtung rotierbar, sodass die Stellung des Lenkkranzes in Abhängigkeit von einem momentan eingestellten Radstellwinkels eingestellt wird. Bei einem Eingriff des Fahrers im Falle einer Beendigung des vollautomatischen Assistenzmodus wird dem Fahrer durch die Stellung des Lenkradkranzes 12 die Stellung der Vorderräder rückgemeldet.

Der Touch-Screen 16 verbleibt im vollautomatischen Assistenzmodus zentral und feststehend im direkten Zugriff des Fahrers. Die Bedienung der Fahrerassistenzeinrichtung im vollautomatischen Assistenzmodus erfolgt über eine Parameter- und Manöverschnittstelle auf dem Touch-Screen 16. Hier kann der Fahrer beispielsweise einstellen, welchen Sollabstand der Kraftwagen zu einem voran fahrenden Fahrzeug einhalten soll oder welche Querlage der Kraftwagen auf der aktuell befahrenen Spur haben soll. Der Sollabstand und die Querablage stellen Fahrparameter für den vollautomatischen Assistenzmodus dar, gemäß welcher das aktuelle Fahrmanöver ausgeführt wird. Zudem kann der Fahrer auch ein anderes Fahrmanöver (Überholen, Fahrspurwechsel, Einparken, Abbiegen) auswählen, das von der Fahrerassistenzeinrichtung bei nächster Gelegenheit ausgeführt werden sollen.

Durch die Fahrerassistenzeinrichtung wird die Umgebung des Kraftwagens mittels eine Überwachungseinrichtung überwacht. Die Überwachungseinrichtung kann beispielsweise eine Kamera und/oder einen Abstandsradar umfassen, mit denen Objekte in der Umgebung auf eine an sich bekannte Weise erkannt werden können. Erkennt die Fahrerassistenzeinrichtung hierbei, dass eine vollständig autonome Führung des Kraftwagens durch die Fahrerassistenzeinrichtung möglicht ist, weil beispielsweise der Kraftwagen im Stau lediglich in Stop-and-Go-Fahrweise und höchstens mit Schrittgeschwindigkeit geführt werden kann, so zeigt die Fahrerassistenzeinrichtung dem Fahrer an, dass in den autonomen Assistenzmodus gewechselt werden kann. Die Aktivierung des autonomen Assistenzmodus kann durch den Fahrer beispielsweise über den Touch-Screen 16 erfolgen. Dann sind auf dem Touch-Screen 16 erweiterte Infotainmentinhalte für den Fahrer bereitstellbar, da dieser nun nicht mehr jederzeit darauf gefasst sein muss, in einem Notfall die Führung des Fahrzeugs zu übernehmen. Für den Fall, dass eine automatisierte Führung des Kraftwagens als unsicher erkannt wird, wird im autonomen Assistenzmodus der Kraftwagen stattdessen durch die Fahrerassistenzeinrichtung selbst in einen sicheren Zustand gebracht, indem der Kraftwagen beispielsweise zum Stillstand gebracht wird.

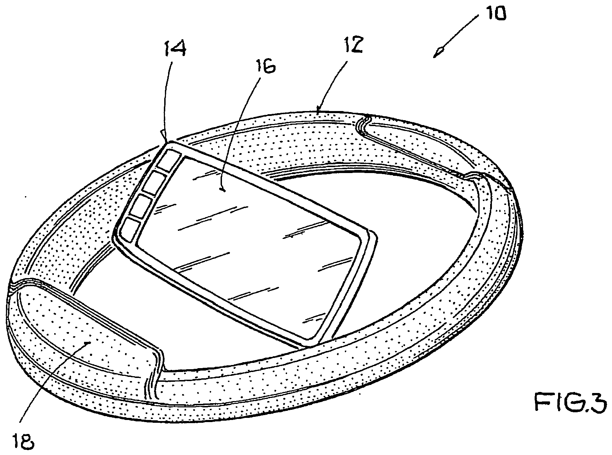

Um dem Fahrer die Möglichkeit zur erweiterten Interaktion mit dem Infotainmentsystem zu geben, kann durch ein Kippen und gegebenenfalls Verfahren des Touch-Screens 16 und des Lenkradkranzes 12 eine bequemere Bedienung ermöglicht werden (siehe Fig. 3). Die Touchfläche des Touch-Screens 16 dient als Eingabemedium für die erweiterten Infotainmentinhalte (zum Beispiel als Tastatur und/oder Maus-Touchfeld für Office-Tätigkeiten) und die Handballenablage 18 wird nach unten gekippt. Sowohl der Touch-Screen 16 als auch der Lenkradkranz 12 mit der Handballenablage 18 sind nun komplett von dem Lenkgestänge entkoppelt, sodass sie stillstehen, während die Fahrerassistenzeinrichtung den Radeinschlagwinkel verändert.

Bei einer Deaktivierung der verschiedenen Assistenzmodi kann unter Umständen ein aktives Verfahren der einzelnen Elemente (Lenkradkranz 12, Tastenfeld 14 und Touch-Screen 16) nötig sein. Wird beispielsweise der autonome Assistenzmodus deaktiviert, müssen sowohl der Lenkradkranz 12 als auch der Touch-Screen 16 derart eingestellt werden, dass der aktuelle Lenkradwinkel als Lenkwinkel des Lenkkranzes 12 und der Touch-Screen 16 wieder als integrales Element dem Fahrer zur manuellen Fahrt bzw. zur Teilautomation im Stand-By-Betrieb zur Verfügung stehen.

Der Lenkradkranz 12, das Tastenfeld 14 und der Touch-Screen 16 stellen jeweils ein Bedienelement dar, wobei die zur Bedienung dieser drei Bedienelemente auszuführenden Bedienhandlungen sich klar voneinander unterscheiden. Der Lenkradkranz 12 ist dabei primär für die manuelle Fahrt, das Tastenfeld 14 für die Bedienung der Fahrerassistenzeinrichtung im teilautomatischen Assistenzmodus und der Touch-Screen 16 für die Bedienung der Benutzerschnittstelle im vollautomatischen Assistenzmodus bereitgestellt. Durch die unterschiedlichen Bedienhandlungen in den einzelnen Assistenzmodi sind diese Assistenzmodi für den Benutzer einfacher zu verstehen und genauer voneinander abgrenzbar. Die Systemtransparenz wird innerhalb eines Assistenzmodus sowie zwischen den Assistenzmodi erhöht. Dem Benutzer wird hierdurch sehr viel klarer, welche Einflussmöglichkeiten er auf die Führung des Kraftwagens in welchem Assistenzmodus hat. Durch die Abgrenzung des Tastenfelds 14 von dem Touch-Screen 16 wird die Komplexität des teilautomatischen Assistenzmodus nicht unnötig vergrößert. Für den vollautomatischen Assistenzmodus können zudem beispielsweise mittels des gezeigten Touch-Screens 16 neuartige Interaktionsformen bereitgestellt werden (berührungsempfindliche Fläche, Force-Feedback). Diese Interaktionsformen können dann optimal auf die Anforderungen des Fahrerassistenzsystems in dem vollautomatischen Assistenzmodus abgestimmt sein. Durch Bereitstellen des Touch-Screens auf dem Pralltopf des Lenkrads wird zudem die Möglichkeit eröffnet, im autonomen Assistenzmodus erweiterte Infotainmentinhalte (Anzeigen von Nachrichten oder E-Mails, Ermöglichen einer Betrachtung von Internetseiten und dergleichen) dem Fahrer darzubieten.

## Patentansprüche

1. Kraftwagen mit einer Fahrerassistenzeinrichtung,
- welche dazu ausgelegt ist, den Kraftwagen selbständig während einer Fahrt des Kraftwagens zu führen, und
- welche hierbei zwischen mehreren Assistenzmodi umschaltbar ist, die sich in einem Grad der Selbständigkeit der Fahrerassistenzeinrichtung beim Führen des Kraftwagens voneinander unterscheiden, sowie
mit einer ersten, einer zweiten und einer dritten Bedieneinrichtung (12, 14,16),
- welche sich in zu ihrer Bedienung auszuführenden Bedienhandlungen voneinander unterscheiden,
wobei bei der Fahrerassistenzeinrichtung in einem vollautomatischen Assistenzmodus zumindest eine selbständige Querführung, in einem automatischen Assistenzmodus zumindest eine Geschwindigkeitsregelung und in einem manuellen Assistenzmodus gar keine Führung des Kraftwagens durch die Fahrerassistenzeinrichtung vorgesehen ist und hierbei die erste Bedieneinrichtung (12) zum direkten Führen des Kraftwagens durch einen Fahrer des Kraftwagens, die zweite Bedieneinrichtung (14) zum Einstellen von Fahrparametern für den teilautomatischen Assistenzmodus und die dritte Bedieneinrichtung (16) zum Bedienen einer Benutzerschnittstelle für den vollautomatischen Assistenzmodus ausgelegt ist,
wobei zumindest zwei der Bedieneinrichtungen (12, 16) gegeneinander beweglich gelagert sind, und wobei die erste Bedieneinrichtung (12) ein Lenkrad (12) umfasst,
**dadurch gekennzeichnet, dass**
an einem Pralitopf des Lenkrads (12) ein Touch-Screen (16) als dritte Bedieneinrichtung angeordnet ist, und die Fahrerassistenzeinrichtung dazu ausgelegt ist, eine relative Lage zumindest der ersten und der dritten Bedieneinrichtung (12, 16) zueinander in Abhängigkeit von dem momentan aktiven Assistenzmodus durch Ansteuern eines Aktors einzustellen.

2. Kraftwagen nach Anspruch 1, wobei in zumindest einem Assistenzmodus zumindest eine der Bedieneinrichtungen (12, 14, 16) deaktiviert ist.

3. Kraftwagen nach Anspruch 1 oder 2, wobei zumindest eine der Bedieneinrichtungen (12, 14, 16) in dem Kraftwagen bewegbar gelagert ist und der Kraftwagen zumindest einen Aktor zum Verstellen einer Position der zumindest einen Bedieneinrichtung (12, 14, 16) in dem Kraftwagen aufweist und wobei die Fahrerassistenzeinrichtung dazu ausgelegt ist, die Position der zumindest einen Bedieneinrichtung (12, 14, 16) in Abhängigkeit von dem momentan aktiven Assistenzmodus durch Ansteuern des zumindest einen Aktors einzustellen.

4. Kraftwagen nach einem der vorhergehenden Ansprüche, wobei zumindest eine der Bedieneinrichtungen (14, 16) an einer anderen der Bedieneinrichtungen (12) angeordnet ist.

5. Kraftwagen nach einem der vorhergehenden Ansprüche, wobei die erste Bedieneinrichtung (12) ein Lenkrad umfasst, welches einen Aktor aufweist, der dazu ausgelegt ist, an dem Lenkrad (12) eine Kraftrückkopplung für einen Benutzer des Lenkrads (12) zu erzeugen, und wobei die Fahrerassistenzeinrichtung dazu ausgelegt ist, im vollautomatischen Assistenzmodus ein Steuersignal zum Steuern der Kraftrückkopplung an dem Aktor zu erzeugen.

6. Kraftwagen nach einem der vorhergehenden Ansprüche, wobei über die Benutzerschnittstelle im vollautomatischen Assistenzmodus von einem Benutzer ein durch die Fahrerassistenzeinrichtung selbständig durchzuführendes Fahrmanöver auswählbar und/oder ein Fahrparameter eines aktuell durchgeführten Fahrmanövers einstellbar ist.

7. Kraftwagen nach einem der vorhergehenden Ansprüche, wobei die Fahrerassistenzeinrichtung zusätzlich dazu ausgelegt ist, in einem autonomen Assistenzmodus den Kraftwagen (10) durch eine selbständige Quer- und Längsführung vollautomatisch,zu führen und hierbei auch selbständig einen Wert zu einem Fahrparameter eines aktuell ausgeführten Fahrmanövers festzulegen und/oder eine selbständige Entscheidung über durchzuführende Fahrmanöver zu treffen.

8. Kraftwagen nach einem der vorhergehenden Ansprüche, wobei die zweite Bedieneinrichtung (14) zumindest ein Bedienelement aufweist, das an einem Lenkrad (12) des Kraftwagens angeordnet ist, wobei zumindest ein Bedienelement davon bevorzugt ein Tastschalter, ein Wippschalter oder ein Drehrad ist.

9. Verfahren zum Betreiben eines Kraftwagens, welcher eine Fahrerassistenzeinrichtung aufweist, die dazu ausgelegt ist, in einem vollautomatischen Assistenzmodus den Kraftwagen vollständig selbständig zu führen, umfassend den Schritt:
- im vollautomatischen Assistenzmodus Ansteuern eines Aktors durch die Fahrerassistenzeinrichtung und hierdurch Einstellen einer Drehlage eines Lenkrads (12) des Kraftwagens in Abhängigkeit von einem momentan von der Fahrerassistenzeinrichtung eingestellten Radeinschlagwinkel,
**dadurch gekennzeichnet, dass**
im vollautomatischen Assistenzmodus ein auf einem Pralitopf des Lenkrads (12) angeordneter Touch-Screen (16) als Benutzerschnittstelle zum Auswählen eines Fahrmanövers und/oder zum Einstellen von Fahrparametern für ein aktuell durchgeführtes Fahrmanöver betrieben wird und zuvor beim Aktivieren des vollautomatischen Assistenzmodus durch die Fahrerassistenzeinrichtung ein Aktor angesteuert wird und hierdurch ein Lenkradkranz (12) im Verhältnis zum Touch-Screen (16) von einem Fahrer des Kraftwagens wegbewegt wird.

## Claims

1. Motor vehicle having a driver assistance device,
- which is configured to guide the motor vehicle autonomously during a trip of the motor vehicle and
- which can in doing so be switched between a plurality of assistance modes, which differ from each other in the degree of autonomy of the driver assistance device when guiding the motor vehicle as well as
having a first, a second and a third operational device (12, 14, 16),
- which differ from each other in operational actions to be performed for their operation,
wherein in the case of the driver assistance device, at least one autonomous transverse guidance is provided in a fully-automated assistance mode, at least one speed control is provided in a partially-automated assistance mode and no guidance of the motor vehicle by the driver assistance device is provided in a manual assistance mode and in doing so the first operational device (12) is configured to directly guide the motor vehicle by a driver of the motor vehicle, the second operational device (14) is configured to adjust driving parameters for the partially-automated assistance mode and the third operational device (16) is configured to operate a user interface for the fully-automated assistance mode, wherein at least two of the operational devices (12, 16) are mounted so as to be movable towards each other and wherein the first operational device (12) comprises a steering wheel (12), **characterised in that** a touch screen (16) is arranged on an impact absorber of the steering wheel (12) as the third operational device and the driver assistance device is configured to adjust a relative position of at least the first and the third operational device (12, 16) in relation to each other as a function of the currently active assistance mode by actuating an actuator.

2. Motor vehicle according to claim 1, wherein at least one of the operational devices (12, 14,16) is deactivated in at least one assistance mode.

3. Motor vehicle according to claim 1 or 2, wherein at least one of the operational devices (12, 14, 16) is mounted so as to be movable in the motor vehicle and the motor vehicle has at least one actuator to adjust a position of the at least one operational device (12, 14, 16) in the motor vehicle and wherein the driver assistance device is configured to adjust the position of the at least one operational device (12, 14, 16) as a function of the currently active assistance mode by actuating the at least one actuator.

4. Motor vehicle according to any one of the preceding claims, wherein at least one of the operational devices (14, 16) is arranged on another of the operational devices (12).

5. Motor vehicle according to any one of the preceding claims, wherein the first operational device (12) comprises a steering wheel which has an actuator configured to produce a force feedback on the steering wheel (12) for a user of the steering wheel (12) and wherein the driver assistance device is configured to produce a control signal to control the force feedback at the actuator in the fully-automated assistance mode.

6. Motor vehicle according to any one of the preceding claims, wherein a driving manoeuvre to be autonomously performed by the driver assistance device can be selected and/or a driving parameter of a currently performed driving manoeuvre can be adjusted by a user via the user interface in the fully-automated assistance mode.

7. Motor vehicle according to any one of the preceding claims, wherein the driver assistance device is also configured to fully-automatically guide the motor vehicle (10) by way of autonomous transverse and longitudinal guidance in an autonomous assistance mode and in doing so also specify a value for a driving parameter of a currently performed driving manoeuvre and/or to make an autonomous decision regarding driving manoeuvres to be performed.

8. Motor vehicle according to any one of the preceding claims, wherein the second operational device (14) has at least one operational element which is arranged on a steering wheel (12) of the motor vehicle wherein at least one operational element thereof is preferably a press button, a rocker switch or a rotary knob.

9. Method for operating a motor vehicle which has a driver assistance device configured to fully autonomously guide the motor vehicle in a fully-automated assistance mode, comprising the step of:
- actuating an actuator in the fully-automated assistance mode by the driver assistance device and hereby adjusting a turning position of a steering wheel (12) of the motor vehicle as a function of a wheel turning angle currently adjusted by the driver assistance device, **characterised in that** a touch screen (16) arranged on a shock absorber of the steering wheel (12) is operated in the fully-automated assistance mode as the user interface to select a driving manoeuvre and/or to adjust driving parameters for a currently performed driving manoeuvre and an actuator is previously actuated when activating the fully-automated assistance mode by the driver assistance device and hereby a steering wheel rim (12) is moved away from a driver of the motor vehicle in relation to the touch screen (16).

## Revendications

1. Véhicule automobile
avec un dispositif d'assistance au conducteur,
- lequel est conçu pour conduire le véhicule automobile de manière autonome pendant un trajet du véhicule automobile, et
- lequel est alors commutable entre plusieurs modes d'assistance qui se distinguent les uns des autres par un degré d'autonomie du dispositif d'assistance au conducteur lors de la conduite du véhicule automobile,
ainsi qu'avec un premier, un deuxième et un troisième dispositif de commande (12,14,16),
- lesquels se distinguent les uns des autres par leurs actions de commande à exécuter en vue de leur commande,
dans lequel, au niveau du dispositif d'assistance au conducteur, il est prévu dans un mode d'assistance complètement automatique au moins un guidage transversal autonome, dans un mode d'assistance partiellement automatique au moins une régulation de vitesse et dans un mode d'assistance manuel aucune conduite du véhicule automobile par le dispositif d'assistance au conducteur et, ce faisant, le premier dispositif de commande (12) est conçu pour la conduite directe du véhicule automobile par un conducteur du véhicule automobile, le deuxième dispositif de commande (14) pour le réglage de paramètres de conduite pour le mode d'assistance partiellement automatique et le troisième dispositif de commande (16) pour la commande d'une interface d'utilisateur pour le mode d'assistance complètement automatique,
et dans lequel au moins deux des dispositifs de commande (12, 16) sont montés de manière à être mobiles l'un par rapport à l'autre, le premier dispositif de commande (12) comprenant un volant de direction (12),
**caractérisé en ce qu'**un écran tactile (16) est agencé comme troisième dispositif de commande au niveau d'une partie centrale du volant de direction (12) et **en ce que** le dispositif d'assistance au conducteur est conçu pour régler une position relative au moins du premier et du troisième dispositif de commande (12, 16) l'un par rapport à l'autre en fonction du mode d'assistance momentanément actif et au moyen d'une commande d'un actionneur.

2. Véhicule automobile selon la revendication 1, dans lequel au moins l'un des dispositifs de commande (12, 14, 16) est désactivé dans au moins un mode d'assistance.

3. Véhicule automobile selon la revendication 1 ou 2, dans lequel au moins l'un des dispositifs de commande (12, 14, 16) est logé de manière à être mobile dans le véhicule automobile, dans lequel le véhicule automobile comporte au moins un actionneur pour régler une position de l'au moins un dispositif de commande (12, 14, 16) dans le véhicule automobile et dans lequel le dispositif d'assistance au conducteur est conçu pour régler la position de l'au moins un dispositif de commande (12, 14, 16) en fonction du mode d'assistance momentanément actif et au moyen de la commande de l'au moins un actionneur.

4. Véhicule automobile selon l'une des revendications précédentes, dans lequel au moins l'un des dispositifs de commande (14, 16) est agencé sur un autre des dispositifs de commande (12).

5. Véhicule automobile selon l'une des revendications précédentes, dans lequel le premier dispositif de commande (12) comprend un volant de direction qui comporte un actionneur qui est conçu pour produire au niveau du volant de direction (12) une rétroaction de force destinée à un utilisateur du volant de direction (12) et dans lequel le dispositif d'assistance au conducteur est conçu pour, dans le mode d'assistance complètement automatique, produire un signal de commande destiné à commander la rétroaction de force au niveau de l'actionneur.

6. Véhicule automobile selon l'une des revendications précédentes, dans lequel, dans le mode d'assistance complètement automatique, un utilisateur peut, par l'intermédiaire de l'interface d'utilisateur, sélectionner une manoeuvre de conduite à effectuer de manière autonome par le dispositif d'assistance au conducteur et/ou régler un paramètre de conduite d'une manoeuvre de conduite actuellement effectuée.

7. Véhicule automobile selon l'une des revendications précédentes, dans lequel le dispositif d'assistance au conducteur est conçu en outre pour, dans un mode d'assistance autonome, conduire de façon complètement automatique le véhicule automobile (10) via un guidage transversal et longitudinal autonome et ce faisant spécifier aussi de manière autonome une valeur d'un paramètre de conduite d'une manoeuvre de conduite actuellement exécutée et/ou prendre une décision autonome concernant des manoeuvres de conduite à effectuer.

8. Véhicule automobile selon l'une des revendications précédentes, dans lequel le deuxième dispositif de commande (14) comporte au moins un élément de commande qui est agencé sur un volant de direction (12) du véhicule automobile, au moins un élément de commande étant de préférence une touche à effleurement, un commutateur à bascule ou un bouton rotatif.

9. Procédé de fonctionnement d'un véhicule automobile qui comporte un dispositif d'assistance au conducteur qui est conçu pour conduire de façon complètement autonome le véhicule automobile dans un mode d'assistance complètement automatique, comprenant l'étape :
- dans le mode d'assistance complètement automatique, commande d'un actionneur par le dispositif d'assistance au conducteur et ainsi réglage d'une position en rotation d'un volant de direction (12) du véhicule automobile en fonction d'un angle de braquage de roues momentanément réglé par le dispositif d'assistance au conducteur,
**caractérisé en ce que**, dans le mode d'assistance complètement automatique, un écran tactile (16) agencé sur une partie centrale du volant de direction (12) est exploité comme interface d'utilisateur pour sélectionner une manoeuvre de conduite et/ou pour régler des paramètres de conduite destinés à une manoeuvre de conduite actuellement effectuée et **en ce que**, auparavant, lors de l'activation du mode d'assistance complètement automatique, un actionneur est commandé par le dispositif d'assistance au conducteur et une jante de volant de direction (12) est ainsi écartée d'un conducteur du véhicule automobile par rapport à l'écran tactile (16).
